# FASCICULE DE BREVET EUROPEEN

(11) **EP 0 829 276 B1**
(45) Date de publication et mention de la délivrance du brevet: **31.10.2001**
(21) Numéro de dépôt: 97870131.6
(22) Date de dépôt: 05.09.1997
(51) Int. Cl.: A62D 3/00, B09B 3/00, C04B 18/10, B03B 9/04

(54) **Procédé de solidification de résidus d'épuration des fumées d'incinérateurs d'ordures ménagères et de déchets industriels**
Verfahren zur Verfestigung der Reinigungsrückstände von Müllverbrennungsabgasen und industriellen Abfällen
Process for solidifying residues of purification of fumes from garbage incineration and industrial wastes

(30) Priorité: 12.09.1996 BE 9600765
(43) Date de publication de la demande: 18.03.1998
(73) Titulaire: Revatech S.A., 4020 Liège (BE)
(72) Inventeur: Preschia, Marc M., 4122 Neupré (BE)
(74) Mandataire: Goegebeur, Erik

(56) Documents cités:
- EP-A- 0 572 813
- WO-A-96/14901
- DE-A- 4 338 690
- DATABASE WPI Section Ch, Week 9304 Derwent Publications Ltd., London, GB; Class J01, AN 93-031594 XP002032210 & JP 04 358 582 A (FUJI SASH CO) , 11 décembre 1992
- DATABASE WPI Section Ch, Week 8007 Derwent Publications Ltd., London, GB; Class L02, AN 80-11863C XP002032211 & JP 55 001 830 A (TOYODA CHEM ENG KK) , 9 janvier 1980
- DATABASE WPI Section Ch, Week 8227 Derwent Publications Ltd., London, GB; Class J01, AN 82-55729E XP002032212 & JP 57 084 786 A (NIPPON KOKAN KK) , 27 mai 1982

## Description

### Les cendres volantes d'incinération d'origine ménagère

D'après des statistiques françaises, chaque personne est sensée produire +/- 400 kg de déchets par an dont :
* 21 % fermentescibles
* 20 % fines
* 9 % cartons
* 15 % papiers
* 3 % textiles sanitaires
* 11% plastiques
* 2 % composites
* 7% verre
* 4 % métaux
* 3 % combustibles non classés
* 1 % déchets spéciaux

La solution de recycler certains produits reste encore hypothétique, donc la seule solution viable pour éliminer ces déchets reste l'incinération, avec éventuellement récupération d'énergie. Vu la composition variée des déchets à incinérer et une température de combustion élevée (+/- 1.100 °C), les fours sont susceptibles de produire des émissions atmosphériques polluantes contenant des :
- composés volatiles inorganiques : HCl, HF, NO₂, SO₂
- métaux lourds (As, Cd, Cr, Cu, Hg, Ni, Pb, Zn)

Il est évident que de tels polluants ne peuvent pas être rejetés à l'air ambiant. Dans le cadre de la politique européenne de lutte contre la pollution atmosphérique, les fumées doivent être traitée au moyen des techniques appropriées (traitement humide, traitement sec ou semi-sec). Nous nous trouvons donc en bout de ces installations d'épuration des fumées en présence d'un résidu, les fines de dépoussiérage, résultant d'un simple transfert de pollution gaz-solide.

A l'heure actuelle, les déchets sont généralement mis en décharge sans traitement préalable. Le tableau ci-dessous nous donne la composition chimique comparée des résidus obtenus par les 3 procédés de traitement des fumées, humide, sec et semi-sec, ainsi que la fraction lixiviée de chaque polluant lors d'un test laboratoire qui tend à simuler l'action d'une eau de pluie acide sur les résidus mis en décharge (les procédés sec et demi-sec donnant des résidus de composition similaire ont été repris dans la même colonne.

| Paramètre | Résidus du traitement humide(g/kg) | Fraction lixiviée | Résidus du traitement sec et demi-sec (g/kg) | Fraction lixiviée |
|---|---|---|---|---|
| CL⁻ | 5 - 20 | 90 % | 150 - 300 | 90 % |
| SO⁻⁻ ₄₋ | 4 - 6 | 70 - 90 % | 15 - 25 | - |
| Cd | 0,1 - 3 | 1 - 4 % | 0,05 - 0,47 | - |
| Fe | 5 - 19 | - | 1,1 - 10,6 | - |
| Mn | 1 | - | 0,2 - 0,5 | - |
| Ni | 0,04 - 0,06 | - | 0,03 - 0,06 | - |
| Pb | 1,6 - 5,8 | 0,1 - 0,2 % | 1,8 - 7 | 10 - 40 % |
| Zn | 4,2 - 9 | 1 - 5 % | 6 - 17 | 1,5 - 2,5 % |
| Cu | 0,1 - 0,5 | - | 0,08 - 0,66 | - |
| Hg | 0,5 - 0,7 | 0,01 - 0,1 | 0,002 - 0,05 | - |

Dans le cas de mise en décharge des résidus de traitement par voie humide, l'acidité des eaux de pluie va être neutralisée très rapidement par la chaux libre présente dans ceux-ci. Les eaux de lixiviation initiales auront donc un pH de 7,3 à 7,7 et, dans ces conditions, une partie des métaux lourds va se solubiliser. Ensuite, en fonction du départ progressif de la chaux par lixiviation, les pH des extraits successifs vont diminuer.

Dès lors, on observe une solubilité croissante des métaux lourds qui se retrouveront dans l'environnement ou dans les eaux à la sortie de la décharge (ex : une baisse de pH de 3 unités augmente la valeur de la fraction de Pb, Zn et de Cd lixiviée de +/- 500 fois). En ce qui concerne les résidus du traitement sec et demi-sec, suite à leur teneur très élevée en chaux (addition de chaux pulvérulente dans le réacteur), les pH des lixiviants sont compris entre 11,8 et 12,8. A ces pH élevés, les anions sont presque totalement dissous (SO₄-- etc.). Des métaux lourds comme le Pb, et le Zn, par formation des complexes solubles à ces pH élevés, présenteraient une forte solubilité. Dans ce contexte, l'excès de chaux constitue, paradoxalement, un effet défavorisant. En conclusion, en l'absence de traitements adéquats, on risque de retrouver, dans les eaux de lixiviation de ces résidus, +/- 300 kg/T de chlorures, 17 kg/T de Zn, 7 kg/T de Pb pour les résidus du traitement sec et semi-sec, ainsi que +/- 20 kg/T de chlorures, 9 kg/T de Zn, 5,8 kg/T de Pb, 0,7 kg/T de Hg pour les résidus humides, ce qui présente un risque pour l'environnement et un problème pour l'exploitant de la décharge.

### Les déchets industriels solides et liquides

La problématique des déchets industriels liquides et solides est assez similaire à celle des résidus de dépoussiérage. En effet, un des problèmes majeurs rencontrés dans la solidification par voie classique de déchets industriels est la présence pratiquement inévitable de matières organiques dans la majorité des déchets réputés "inorganiques", ainsi que la présence de sels solubles divers. Ces matières peuvent être hydrosolubles telles
que :
- des phénols
- crésols
- des alcools
- des glycols
- des amines aliphatiques
- des chlorures, sulfates, nitrates,...
ou non hydrosolubles :
- des hydrocarbures aliphatiques présents dans les produits pétroliers
   - des hydrocarbures polycycliques aromatiques (benzopyrène, naphtalène, anthracène, etc..) présents dans les goudrons de houille.

Sur les sites d'enfouissement, si en terne de lixiviation des blocs solidifiés, les matières de la seconde catégorie posent moins de problèmes grâce à leur insolubilité et à leur "encapsulage" dans la matrice solide, les matières de la première catégorie vont immanquablement être lessivées par les eaux de pluies.

Afin d'éviter le passage des polluants solubles dans l'environnement, des solutions existent, ce sont :
- la couverture étanche des produits dès leur mise en décharge
- l'étanchéification naturelle ou artificielle du site afin de réaliser la "marmite" bien connue
- la mise en place d'une installation de traitement des lixiviats par voie physico-chimique, biologique, etc..

Cependant, même bien confinés, les organiques hydrosolubles (ainsi que les sels solubles) garderont leur potentiel de danger durant de nombreuses années.

Même après fermeture du site, ce potentiel subsistera, obligeant les exploitants à conserver en fonctionnement les installations d'épuration, ce qui entraînera des coûts supplémentaires difficiles à estimer.

Dès lors, il est plus sain de régler "à la racine" cette problématique en extrayant les matières hydrosolubles des déchets avant leur mise en site d'enfouissement et ce à un coût connu exactement plutôt que d'hypothéquer l'avenir.

### Procédés utilisés industriellement

Parmi les procédés de traitement des résidus d'épuration des fumées d'incinérateur d'ordures ménagères, (ci-après sera utilisé l'abrégé "Refiom"), deux grandes familles sont utilisées :
. procédés de lavage et extraction;
. procédés de solidification par liants hydrauliques.

1) Le procédé SULZER comporte schématiquement 3 opérations successives :

Un lavage de la fraction soluble des fines au moyen d'eau (2 à 2,5 m³/T de Refiom) additionnée de chaux (Ca(OH)₂ à 30 %) et/ou de réactifs d'extraction.

Une filtration du mélange eau + Refiom au moyen d'un filtre à bande sous vide.

Les filtrats contenant les sels NaCl, Na₂SO₄, CaCl₂, CaSO₄,... ainsi que des quantités faibles de métaux sont envoyés vers un traitement physico-chimique où les métaux sont précipités. Les résidus solides du physico-chimique sont renvoyés vers le filtre et réincorporés au gâteau de résidus. L'eau épurée des métaux lourds est rejetée avec les sels. Un traitement supplémentaire par évaporation permettrait de séparer les sels cristallisés de l'eau.

Une solidification des galettes du filtre au moyen de réactifs hydrauliques après stockage intermédiaire. La solidification est usuellement réalisée par ajout aux galettes de +/- 15 % de ciment portland et du complément nécessaire en eau de gâchage.

Les matériaux sont solidifiés en vrac dans des bennes, containers ou mis en forme pour mise en centre d'enfouissement technique.

### 2) Les procédés de Solidification / Stabilisation par liants hydrauliques

Procédé de 1ère génération consistent en un mélange simple des déchets, avec les réactifs hydrauliques, l'eau contenue dans les déchets constituant l'eau de gâchage hydratation, nécessaire à la solidification.

Les réactifs hydrauliques mis en oeuvre étaient :
* des ciments (Portland, métallurgiques,...)
* de la chaux
* des cendres volantes de centrale électrique
* du laitier de haut fourneau
* des adjuvents éventuels

La mise en oeuvre était simple et nécessitait peu de matériel (mixer à béton, silos,...).

Les inconvénients de ces procédés de 1ère génération sont :
- pour les procédés travaillant en phase liquide :
   * l'augmentation importante de la masse solidifiée par rapport à la masse de départ des Refioms : En effet, les déchets boueux, contenant parfois jusqu'à 80-90% d'eau, la quantité de réactifs nécessaire pour solidifier cette eau par hydratation des silicates est très importante.
   * le risque de ségrégation dans le mortier liquide avant solidification créant :
      - une hétérogénéité analytique
      - des lignes de moindre résistance mécanique
- la difficulté de fixer efficacement par liants hydrauliques les matières solubles telles que les organiques hydrosolubles (phénols, glycols,..; pour les déchets industriels) et en particulier dans le cas des Refioms, les sels (chlorures, sulfates, etc...).

En conséquence, la mise en site d'enfouissement technique des blocs contenant de telles matières hydrosolubles non fixées va constituer un risque potentiel lié à leur lixiviation par les eaux de pluie.
- présence d'air occlus dans les matériaux solidifiés donnant un aspect poreux à la matrice

Le procédé de solidification des résidus d'épuration des fumées d'incinérateurs d'ordures ménagères et de déchets industriels liquides et solides, objet du présent brevet, comporte en combinaison une phase de broyage et de malaxage pendant laquelle les résidus ou les déchets sont mélangés avec les réactifs pouzzolaniques, les réactifs hydrauliques, une phase de réaction et d'extraction pendant laquelle les mélanges obtenues pendant la première phase sont envoyés dans les réacteurs, ou s'effectuera une insolubilisation des métaux lourds par mélange avec du sulfure de soude et carbonate de soude, un ajustement du pH du mélange au moyen d'un acide; une extraction des composés solubles hors des résidus et des déchets au moyen de l'eau ajoutée à la phase de broyage et de malaxage, et des réactions physico-chimiques par mélange avec des réactifs d'oxydation ou réduction, une phase de déshydratation dans un filtre-presse; une phase de solidification et de réhydratation partielle, et une phase finale de traitement de l'eau de filtration.

Les cinq phases sont décrites plus en détail ci-après :
1. Phase de Solidification/Fixation des résidus d'épuration des fumées et de déchets Solidification/Fixation au moyen d'un mélange de liants hydrauliques appropriés et de liants pouzzolaniques tels que des cendres volantes de centrales électriques, des poussières de purge de four de cimenterie, du laitier de haut fourneau. Ce mélange a une action pouzzolanique, c'est-à-dire, la propriété de durcir dans le temps et de former des "pseudo roches" au terme du durcissement grâce à la formation de silicates et de silico-aluminates complexes hydratés par l'eau contenue dans les déchets ou l'eau ajoutée (pour les déchets secs).

La fixation des ions métalliques est possible grâce à la structure particulières des silicates complexes. En effet, cette structure possède un motif de base tétraédrique. Les tétraèdres peuvent être isolés, ou accolés 2 par 2 : il s'agit alors d'une structure octaédrique. Aux sommets des tétraèdres se trouvent des atomes d'oxygène. Au centre des tétraèdres et octaèdres se trouvent, suivant le cas, des atomes de silicium, d'aluminium ou d'autres éléments (Fe, Mg, etc.).

Le motif de base se reproduit en général irrégulièrement, ce qui crée des cavités beaucoup plus importantes où peuvent se loger éventuellement de beaucoup plus gros atomes.

Il se trouve que la structure octaédrique offre un volume intérieur disponible intéressant. En effet, des études cristallographiques ont montré que, si l'on considère la place offerte à l'intérieur d'un octaèdre formé par des sphères jointives égales dont les centres coïncident avec les sommets, le rapport du rayon de la plus grande sphère pouvant s'inscrire à l'intérieur, au rayon des sphères jointives, est d'environ 0,414. Connaissant la taille des sphères jointives 'oxygène), on en déduit que d'assez nombreux cations ont un rayon assez petit pour pouvoir se glisser au centre de ces octaèdres, notamment Si⁴⁺, Mg²⁺, Al³⁺, Fe³⁺. De nombreux autres ont des rayons légèrement supérieurs, mais du même ordre (tous les autres cations des métaux de transition).

En outre, les ions Oxygène figurant au sommet des tétraèdres offrent de grandes possibilités de liaisons covalentes, avec de nombreux cations; le tableau suivant montre la probabilité d'établissement de liaisons covalentes entre les éléments considérés et l'Oxygène:

| ELEMENT | PROBABILITE |
|---|---|
| Ca, Li, S | 21% |
| Mg | 26% |
| Al, Ti, Mn | 37% |
| Cr, Zn | 41% |
| Co, Sn, Pb, Fe, Ni, Sc | 49% |
| Hg, Cu, Ag | 53% |
| H | 61% |

Les liaisons covalentes étant extrêmement fortes, elles doivent permettre de lier un cation métallique de manière très forte à la structure solide formée.

La formation de silico-aluminates consomme de l'eau et les silicates hydratés formés développent des surfaces spécifiques considérables. Ainsi, les polluants (molécules, cations, anions) pourront être piégés, d'abord par réaction d'absorption, et ensuite liés par des liaisons covalents très puissantes. Ainsi la structure obtenue est solide et irréversible avec une amélioration constante dans le temps grâce à l'effet pouzzolanique.

Le type de réactif et les quantités utilisées seront fonction de tests préalables de solidification/lixiviation effectués en laboratoire sur les déchets réels à traiter.

A titre d'exemple on peut donner les fourchettes d'utilisation des réactifs:
- pouzzolanique: de 10 à 60% sur la matière sèche contenue dans les déchets;
- hydraulique: également variable entre 10 et 60% sur la M.S. des déchets.

Pour les cendres volantes d'électrofiltre, le mélange se fait préférentiellement sur base de poussières de four de cimenterie (purges).

Pour les Refioms issus des réacteurs de déchloruration des fumées d'incinérateurs, le mélange se fait à base de cendres volantes de centrale électrique ou de laitier de haut fourneau.

Ce choix est motivé par la teneur importante en chaux des poussières de réacteurs (provenant du lavage des fumées ou déchloruration à la chaux). En effet, l'utilisation de poussières de four à ciment également riches en CaO (+- 57% total - 25% libre) provoquerait un excès important de chaux non liée dans les produits solidifiés avec tous les inconvénients en découlant: gonflement de la matière solide due à l'hydratation de cette chaux en excès après la prise, risque de dégradation de cette matrice par la mise en solution de cette chaux non liée, etc... Par contre, les cendres volantes de centrale électrique sont pauvres en CaO (de 1 à 8%) et vont, en s'hydratant, consommer et fixer la chaux présente dans les Refioms. Ce pouvoir de fixation de la chaux par des cendres volantes (appelé propriété pouzzolanique) qui va conférer aux produits solidifiées des résistances mécaniques croissantes dans les temps est bien connu.
2. Traitement physico-chimique complexe

Ce traitement permet:
- d'une part, une insolubilisation des métaux lourds présents dans le mélange par:
   * ajustement à un pH approprié au moyen d'un acide tel que CO₂ gazeux, acide chlorhydrique, acide sulfurique, acide nitrique, ou un autre acide suivant les caractéristiques particulières des déchets à traiter;
      Cette étape est indispensable afin d'annihiler la formation de complexes solubles de métaux lourds en particulier amphotères (tel que le Pb) aux pH élevés (11⁸ à 12⁸) qui sont inéluctables dans les mélanges de Refioms d'épuration des fumées "sec" et "semi-sec" (voir ci-avant); de même que dans les mélanges de déchets industriels solides et liquides basiques (soude caustique, ...).
   * formation de sulfures métalliques ou carbonates métalliques par addition d'un mélange approprié de Na₂S Na₂CO₃ et/ou CO₂ ou d'un mélange contenant des ions S⁻⁻ et/ou CO₃⁻⁻. Il est important de noter que le sulfure de soude aura également un rôle de décomplexant des complexes métalliques solubles.
      Ces agents par formation de sulfures et carbonates des métaux lourds de solubilité faible, vont permettre d'insolubiliser les métaux en question et d'obtenir un filtrat ne contenant pratiquement plus que les sels de Ca et Na.
Exemple: Na₂S + PbO ^{en présence d'eau} PbS + ...
Na₂CO₃ + PbO ^{en présence d'eau} PbCO₃ + ...
- d'autre part, un traitement par réactions physico-chimiques afin de modifier la structure moléculaire des polluants présents dans le but de rendre ces polluants moins toxiques et/ou moins dangereux pour l'homme et l'environnement.

Ce sont par exemple, des réactions d'oxydoréductions comme:
* la réduction des chromates et bichromates (Cr⁶⁺) en chromates trivalent (Cr³⁺) au moyen d'agents réducteurs tels que:
   - bisulfite de sodium (Na₂S₂O₅),
   - certains métaux réducteurs (Fe²⁺);
* l'oxydation de cyanures (CN⁻) ou nitrites (NO₂⁻), présents dans les déchets, au moyen d'agents oxydants tels que:
   - peroxydes,
   - hypochlorites.

- enfin une mise en solution partielle ou totales des éléments solubles présents dans les déchets. Ces éléments solubles seront des sels solubles (Cl⁻, SO₄⁻⁻) dans le cas de Refioms; des sels solubles divers et des matières organiques solubles diverses dans le cas des déchets industriels.
3. Déshydratation/extraction des solubles

Les solubles mis en solution à la phase 1 et 2 sont extraits au moyen du filtre-presse durant la phase de déshydratation, ou par lavage des galettes formées au niveau du filtre-presse.

Ces éléments solubles seront, des sels solubles (Cl⁻, SO₄⁻⁻, ...) dans le cas de Refioms; des sels solubles divers et des matières organiques solubles diverses (phénols, glycols, alcools, ...) dans le cas de déchets industriels.
4. Réhydratation partielle

Réhydratation partielle des produits finis, de façon à fournir à la matrice en cours de solidification la quantité d'eau nécessaire à une bonne hydratation et donc à une fixation correcte des polluants ainsi que de conférer à cette matrice des caractéristiques mécaniques correctes (résistance à la traction et flexion, perméabilité faible).
5. Traitement des filtrats

Lors du traitement des Refioms ou cendres volantes d'électrofiltre d'incinération d'ordures ménagères, les filtrats produits contiendront principalement des sels CaCl₂, CaSO₄, NaCl, NaSO₄, et des traces de métaux lourds.

Le traitement des filtrats, légèrement basiques, se limitera donc à un ajustement de pH au moyen d'un acide approprié (CO₂, HCl, H₂SO₄).

Par contre dans le cas du traitement de déchets industriels solides et liquides mélangés, outre des sels solubles, le filtrat pourra contenir des matières organiques hydrosolubles (phénols, glycols, alcools, ...) biodégradables ou non.

Dès lors, afin de respecter les autorisations de rejet de ces filtrats, dans les eaux de surface (en cas de non-valorisation de ceux-ci), leur traitement sera plus complexe et devra comporter une ou plusieurs des étapes suivantes :
* ajustement du pH;
* décantation;
* traitement biologique;
* filtration sur sable, charbon actif, résines;
notamment pour éliminer la présence des organiques biodégradables (épuration biologique) ou non biodégradables (filtration sur charbon actif).

Enfin, la destination finales des filtrats va également influencer le type de traitement choisi en fonction
* d'une évacuation pure et simple de ceux-ci sur base d'une autorisation de rejet;
* d'une valorisation de ces filtrats par évaporation (par exemple) afin de cristalliser les sels contenus pour une revalorisation éventuelle (sels d'épandage ou autre); ou d'une réutilisation plus noble nécessitant la filtration sur résine qui va éliminer des filtrats les traces de métaux lourds résiduels.

Le produit qui en résulte a plusieurs caractéristiques
- des excellentes propriétés de lixiviation
- des caractéristiques mécaniques excellentes : résistance à la compression, résistance à la flexion, ce qui confère un meilleur état mécanique et hydraulique de la décharge.
- une densité élevée. Vu que les décharges aujourd'hui sont précieuses et peu nombreuses, il devient intéressant économiquement et écologiquement de transformer un déchet pulvérulent en un monolithe de grande densité.
- la possibilité de diminuer la quantité de déchet ultime, par le recyclage de ce produit, tenant compte de son inertage chimique et de ses caractéristiques mécaniques dans les soubassements de route.

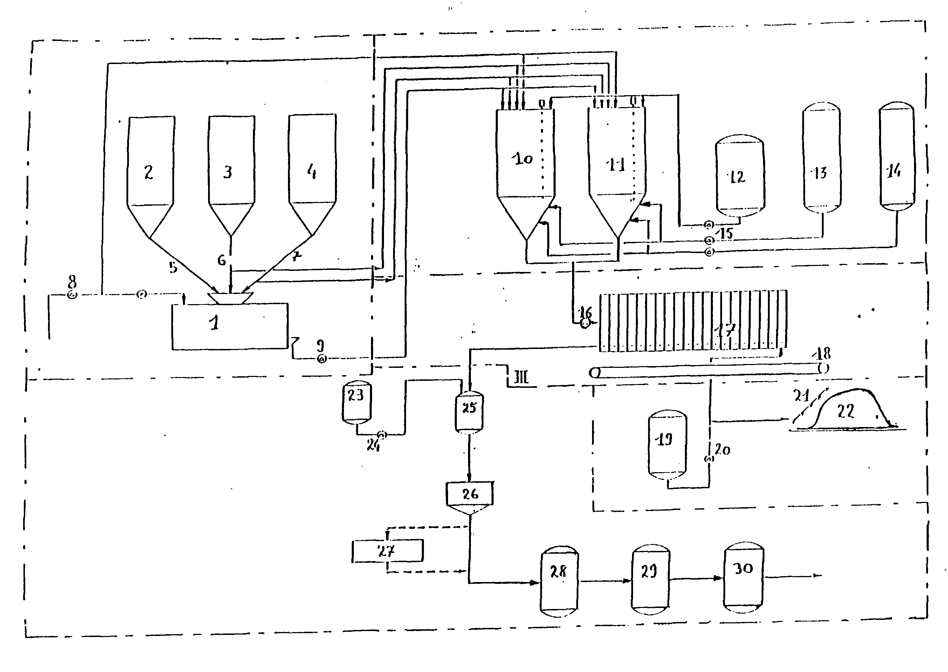

La figure unique illustre l'installation nécessaire pour réaliser le procédé de solidification selon l'invention.

L'ensemble de l'installation complète est composé de cinq parties :
1. Une installation de malaxage/broyage composée de :
   - un malaxeur broyeur - 1,
   - un silo ou réservoir 2 destiné à recevoir les déchets solides ou les Refioms,
   - un silo ou réservoir 3 destiné à recevoir les réactifs pouzzolaniques (cendres volantes de centrale électrique, laitier de haut fourneau, poussière de purge de four à ciment),
   - un silo ou réservoir 4 destiné à recevoir les réactifs hydrauliques (ciments divers, chaux vive ou hydratée),
   - des vis ou transporteurs 5-6-7 destinés à convoyer les produits stockés dans les silos 2 3 4 vers le malaxeur/broyeur,
   - un système 8 de pompage de l'eau ou des déchets industriels liquides,
   - une pompe 9 de transfert des mélanges vers les réacteurs.
2. Une installation de traitement physico-chimique/extraction composée de :
   - deux réacteurs 10, 11 à fonds coniques munis de mélangeurs mécaniques.
   - un réservoir de stockage 12 des réactifs d'insolubilisation des métaux lourds et de décomplexation (Na₂S, Na₂CO₃,...).
   - un réservoir de stockage 13 des réactifs acides d'ajustement de pH (CO₂, H₂SO₄, HCl, HNO₃,...).
   - un réservoir de stockage 14 de réactifs oxydants tels que H₂O₂, Na₂O₂, NaClO, etc.
   - un système 15 de pompage des réactifs liquides vers les réacteurs.
3. Une unité de déshydratation composée de :
   - un système 16 de pompage des mélanges vers le filtre-presse.
   - un filtre-presse 17 classique ou à membrane.
   - une bande transporteuse 18 de sortie des produits finis.
4. Une unité d'hydratation composée de :
   - une cuve de stockage 19 d'eau d'hydratation.
   - une pompe 20.
   - des rampes d'aspersion 21.
5. Une unité de traitement physico-chimique des filtrats composée de :
   - une cuve de stockage 23 d'un acide approprié permettant l'ajustement du pH.
   - un système 24 de pompage de l'acide avec sonde de mesure de pH.
   - un mélangeur/réacteur 25.
   - un décanteur lamellaire 26 ou classique.
   - une unité de traitement biologique 27.
   - une unité de filtration sur sable 28.
   - une unité de filtration sur charbon actif 29.
   - une unité de filtration sur résine 30.

L'installation complète fonctionne en cinq phases :

### Une phase de broyage - malaxage

Pendant la phase de broyage - malaxage les déchets solides grossiers ou agglomérés, issus du silo/réservoir 2 via la vis/transporteur 5, sont d'abord broyés dans le broyeur/malaxeur 1 à une granulométrie suffisamment fine (+- 1 mm) pour éviter la présence de gros nodules de déchets intacts dans les produits finis, susceptibles de nuire à la qualité de ceux-ci.

Ensuite, les déchets solides une fois broyés, sont mélangés avec les réactifs pouzzolaniques et les réactifs hydrauliques transportés par les vis-transporteurs 6 7 depuis les silos/réservoirs 3 et 4.

Simultanément aux 2 opérations ci-dessus, est effectuée au moyen de la pompe 8, une addition contrôlée par débitmètre d'eau d'extraction (pour le traitement des Refioms) ou de déchets liquides (pour le traitement de déchets industriels solides).

### Une phase de réaction/extraction

Les mélanges de Refioms et d'eau ou de déchets liquides + déchets solides constitués à la première phase sont envoyés par pompage par la pompe 9 alternativement dans les 2 réacteurs 10 et 11.

Un traitement physico-chimique des mélanges va alors être effectuée afin :
- d'une part de fixer les métaux lourds.

Par formation de sulfures ou carbonates métalliques au moyen d'un mélange approprié de sulfure de soude et carbonate de soude ou d'un autre composé de S⁻ et CO₃⁻⁻. ces composés contenus dans un réservoir 12 sont distribués par une pompe 15.

Par ajustement du pH du mélange au moyen d'un acide approprié au déchet à traiter
* soit CO₂ gazeux pour les Refioms afin d'éviter la présence de chlorures nitrates ou sulfates supplémentaires inévitables si on utilise un acide minéral classique;
* soit acide sulfurique, chlorhydrique, nitrique,... pour les mélanges de déchets liquides et solides industriels. Ces acides sont stockés dans le réservoir 13 et pompés au moyen de la pompe 15.

- d'autre part, de diminuer la dangerosité des polluants présents dans les déchets industriels au moyen de réactions physico-chimiques appropriées telles que :
- oxydation des cyanures (CN⁻) et nitrites (NO₂⁻⁻)
- réduction des bichromates ou chromates (Cr⁶⁺)

Les réactifs d'oxydation sont stockés dans une cuve 14 et pompé au moyen de la pompe 15 vers les réacteurs. Les réactifs réducteurs sont stockés dans les cuves 13 pour les réactifs acides (HCL + Fe²⁺⁺) et 12 pour les réactifs basiques (Na₂S₂O₅). Notons que les types de réactifs stockés dans les cuves 12-13-14 dépendront du type de déchets à traiter.

Notons également que dans certains cas, l'addition des réactifs hydrauliques et pouzzolaniques devra être effectuée après le traitement physico-chimique de la phase 2 au lieu d'être effectuée après le broyage - mélange de la phase 1. ces cas sont en particulier :
- le traitement des Refioms.
- le traitement de déchets industriels nécessitant un traitement physico-chimique complexe.

A ce niveau va également avoir lieu la mise en solution, dans l'eau ou dans les déchets liquides ajoutés en phase 1, des matières hydrosolubles contenues dans les Refioms ou dans les déchets industriels solides.

La quantité d'eau ajoutée aux Refioms peut varier entre 2 x et 5 x le poids de Refioms en fonction du taux d'extraction désiré.

### Une phase de déshydratation

Le mélange liquide-solide présent dans les réacteurs 10 et 11 est alors pompé au moyen de la pompe 16 dans le filtre-presse 17. Celui-ci est un filtre-presse classique ou un filtre-presse à membranes flexibles.

Lors de cette phase, l'eau présente dans le mélange va être évacuée comme "filtrat" hors du filtre-presse, en emportant avec elle les matières hydrosolubles citées au point précédent (phase 2).

Si nécessaire, les galettes formées dans le filtre-presse peuvent être lavées par injection d'eau contenue dans la cuve 19 vers le filtre-presse à contre-courant, afin d'extraire totalement les matières hydrosolubles susmentionnées.

A la fin de cette phase, le filtre-presse va s'ouvrir et les galettes formées contenant de 30 à 70 % de matières sèches vont être évacuées par le convoyeur 18 vers le stock 22.

### Une phase de solidification et de réhydratation partielle

Cette phase a pour but de laisser durcir les galettes fortement déshydratées (jusqu'à 70% de matières sèches) en leur fournissant la quantité d'eau nécessaire à l'hydratation des cristaux de silicates et silico-aluminates. Cette eau contenue dans la cuve 19 va être ajoutée par aspersion du stock 22 au moyen d'une rampe d'aspersion 21 et d'une pompe 20.

L'hydratation pourra également être effectuée par immersion à intervalles réguliers des produits finis.

### Une phase de traitement des filtrats

L'eau chassée par filtration hors des mélanges formés à la phase 1 et 2 contient donc les matières hydrosolubles présentes dans les déchets tels que susmentionnés. Le traitement des filtrats consistera donc en une des opérations suivantes ou combinaison de ces opérations selon les différents cas (évacuation ou revalorisation) :
* ajustement du pH des filtrats par addition d'un acide approprié stocké dans la cuve 23 (par exemple C₂O ou HCL ou H₂SO₄...) et pompé par la pompe 24 vers le mélangeur 25.
* décantation des matières en suspension au moyen d'un décanteur 26;
* filtration sur sable et charbon actif au moyen des filtres 28 et 29;
* filtration sur résine échangeuse d'ions au moyen du filtre 30;
* traitement biologique éventuel 27 en série avec le décanteur 26.

## Revendications

1. Procédé de solidification de résidus d'épuration des fumées d'incinérateurs d'ordures ménagères et de déchets industriels liquides et solides, **caractérisé en ce qu'**il comporte en combinaison une phase de broyage et de malaxage pendant laquelle les résidus ou les déchets sont mélangés avec les réactifs pouzzolaniques et les réactifs hydrauliques et pendant laquelle l'eau d'extraction ou des déchets liquides sont ajoutés, une phase de réaction et d'extraction pendant laquelle les mélanges obtenus pendant la première phase sont envoyés dans des réacteurs, ou s'effectuera une insolubilisation des métaux lourds par mélange avec du sulfure de soude et carbonate de soude, un ajustement du pH du mélange au moyen d'un acide, une extraction des composés solubles hors des résidus et des déchets au moyen de l'eau ajoutée à la phase de broyage et malaxage; et des réactions physico-chimiques par mélange avec des réactifs, d'oxydation ou réduction, une phase de déshydratation dans un filtre presse; une phase de solidification et de réhydratation partielle, et une phase finale de traitement de l'eau de filtration.

2. Procédé de solidification de résidus d'épuration des fumées d'incinérateurs et de déchets industriels selon la revendication 1, **caractérisée en ce que** pendant la phase de broyage et de malaxage les déchets sont broyés et mélangés avec les réactifs pouzzolaniques et hydrauliques et pendant laquelle l'eau d'extraction ou des déchets liquides sont ajoutés.

3. Procédé de solidification de résidus d'épuration des fumées d'incinérateurs et de déchets industriels selon les revendications 1 et 2 **caractérisée en ce que** pendant la phase de réaction et d'extraction, les mélanges constitués à la première phase sont envoyés dans les réacteurs (10) (11) ou s'effectue une formation de sulfures ou carbonates métalliques au moyen d'un mélange de sulfure de soude et carbonate de soude, un ajustement du pH du mélange au moyen soit de CO₂ gazeux soit d'acide sulfurique, chlorhydrique ou nitrique; des réactions d'oxydoréduction destinées à diminuer la dangerosité des polluants présents dans les mélanges par ajout de réactifs d'oxydation et réducteurs.

4. Procédé de solidification de résidus d'épuration des fumées d'incinérateurs et de déchets industriels selon revendications 1 à 3, **caractérisée en ce que** pendant la phase de déshydratation, le mélange liquide-solide est pompé dans un filtre-presse ou l'eau présente est évacuée en emportant avec elle les matières hydrosolubles.

5. Procédé de solidification de résidus d'épuration des fumées d'incinérateurs et de déchets industriels selon revendications 1 à 4, **caractérisée en ce que** pendant la phase de déshydratation, les galettes formées dans le filtre- presse sont lavées par injection d'eau vers le filtre-presse à contre courant.

6. Procédé de solidification de résidus d'épuration des fumées d'incinérateurs et de déchets industriels selon revendications 1 à 5, **caractérisée en ce que** pendant la phase de réhydratation partielle, il est ajouté de l'eau aux galettes pour assurer l'hydratation des cristaux de silicates et silico-aluminates au moyen d'une rampe d'aspersion ou par immersion.

7. Procédé de solidification de résidus d'épuration des fumées d'incinérateurs et de déchets industriels selon revendications 1 à 5, **caractérisée en ce que** pendant la phase de traitement de l'eau chassée par filtration hors des mélanges formés aux deux premières phases, un acide approprié est additionné à cette eau afin d'ajuster le pH.

8. Procédé de solidification d'incinérateurs et de déchets industriels selon revendications 1 à 5, **caractérisée en ce que** pendant la phase de traitement de l'eau chassée par filtration hors des mélanges formés aux deux premières phases, l'eau est mise en décantation des matières en suspension au moyen d'un décanteur.

9. Procédé pour la solidification de résidus d'épuration de fumées des incinérateurs d'ordures ménagères et de déchets industriels liquides et solides **caractérisée en ce que** pendant la phase de traitement de l'eau chassée par filtration hors des mélanges formés aux deux premières phases, l'eau est traitée par épuration biologique afin d'en éliminer les composés organiques biodégradables.

10. Procédé pour la solidification de résidus d'épuration des fumées d'incinérateurs et de déchets industriels selon revendications 1 à 5, **caractérisée en ce que** pendant la phase de traitement de l'eau chassée par filtration hors des mélanges formées aux deux premières phases, cette eau est filtrée sur sable et charbon actif ou sur résine échangeuse d'ions.

11. Installation pour la solidification de résidus d'épuration des fumées d'incinérateurs d'ordures ménagères et de déchets industriels liquides et solides **caractérisée en ce qu'**elle comporte en combinaison une unité de broyage et de malaxage, une installation de traitement physico-chimique et d'extraction, une unité de déshydratation, une unité d'hydratation et une unité de traitement physico-chimique des filtrats.

12. Installation pour la solidification de résidus d'épuration des fumées d'incinérateurs d'ordures ménagères et des déchets industriels liquides et solides selon la revendication 11 **caractérisé en ce que** l'unité de broyage et de malaxage comporte un broyeur-malaxeur (1) un réservoir (2) pour les déchets solides ou les Refioms, un réservoir (3) pour les réactifs pouzzolaniques, un réservoir (4) pour les réactifs hydrauliques et des moyens de transports (5) (6) (7) et de pompage (8) (9).

13. Installation pour la solidification de résidus d'épuration des fumées d'incinérateurs d'ordures ménagères et de déchets industriels liquides et solides selon la revendication 11 **caractérisé en ce que** l'installation de traitement physico-chimique et d'extraction est composée de deux réacteurs (10) (11), un réservoir (12) pour les réactifs d'insolubilisation des métaux lourds et de décomplexation, un réservoir (13) des réactifs acides, un réservoir (14) de réactifs oxydoréduction et un système de pompage (15) des réactifs liquides vers les réacteurs.

14. Installation pour la solidification de résidus d'épuration des fumées d'incinérateurs d'ordures ménagères et de déchets industriels liquides et solides selon la revendication 11 **caractérisé en ce que** l'unité de déshydratation est composée d'un filtre-presse (17) et de moyens de pompage (16) et de transport (18).

15. Installation pour la solidification de résidus d'épuration des fumées d'incinérateurs d'ordures ménagères et de déchets industriels liquides et solides selon la revendication 11 **caractérisé en ce que** l'unité de réhydratation est composée d'une cuve de stockage (19) d'eau d'une pompe (20) et d'une rampe d'aspersion (21).

16. Installation pour la solidification de résidus d'épuration des fumées d'incinérateurs d'ordures ménagères et de déchets industriels liquides et solides selon la revendication 11 **caractérisé en ce que** l'unité de traitement des filtrats est composée d'une cuve de stockage (23) pour l'acide, d'un système de pompage (24) avec sonde de mesure de pH, d'un réacteur (25), d'un décanteur (26), d'unités de traitement biologique (27), de filtration sur sable (28), de filtration sur charbon actif (29) et d'une unité de filtration sur résine (30).

## Patentansprüche

1. Verfahren zur Verfestigung der Reinigungsrückstände von Müllverbrennungsabgasen und von flüssigen und festen industriellen Abfällen, **dadurch gekennzeichnet, daß** es in Kombination umfaßt :
eine Zerkleinerungs-und eine Knetphase, während der die Rückstände oder Abfälle mit den Puzzolanerde-Reagenzien und den hydraulischen Reagenzien vermischt werden und während der das extrahierte Wasser oder flüssige Abfälle hinzugefügt werden,
eine Reaktions-und Extraktionsphase, während der die in der ersten Phase erhaltenen Gemische in die Reaktoren eingebracht werden, wo durch Vermischen mit Natriumsulfat und Natriumkarbonat eine Unlöslichkeit der leichten Metalle herbeigeführt wird,
eine Einstellung des pH-Wertes der Mischung mittels einer Säure, eine Extraktion der löslichen Bestandteile aus den Rückständen oder Abfällen mittels des in der Zerkleinerungs- und Knetphase zugefügten Wassers ;
und physiko-chemische Reaktionen mittels Vermischen mit den Reagenzien, durch Oxidation oder Reduktion,
eine Phase der Dehydratation in einer Filterpresse,
eine Phase der Verfestigung und der teilweisen Rehydratation und eine abschließende Phase der Behandlung des Filterwassers.

2. Verfahren zur Verfestigung der Reinigungsrückstände von Müllverbrennungsabgasen und von industriellen Abfällen gemäß Anspruch 1, **dadurch gekennzeichnet, daß** die Abfälle während der Zerkleinerungs- und Knetphase zerkleinert und mit den Puzzolanerde-Reagenzien und den hydraulischen Reagenzien vermischt werden und daß während dieser Phase das extrahierte Wasser oder flüssige Abfälle hinzugefügt werden.

3. Verfahren zur Verfestigung der Reinigungsrückstände von Müllverbrennungsabgasen und von industriellen Abfällen gemäß den Ansprüchen 1 oder 2, **dadurch gekennzeichnet, daß** während der Reaktions- und Extraktionsphase, die in der ersten Phase gebildeten Gemische in die Reaktoren (10) (11) eingebracht werden, wo mittels einer Mischung aus Natriumsulfid und Natriumkarbonat eine metallischer Sulfide oder Karbonate erfolgt, mittels gasförmigem CO₂, Schwefelsäure, Salzsäure oder Salpetersäure eine Einstellung des pH-Wertes der Mischung vorgenommen wird ; Redoxreaktionen zur Verringerung der Gefährlichkeit der in den Mischungen enthaltenen Verunreinigungen durch Zugabe oxidierender und Reduzierender Reagenzien.

4. Verfahren zur Verfestigung der Reinigungsrückstände von Müllverbrennungsabgasen und von industriellen Abfällen gemäß den Ansprüchen 1 bis 3, **dadurch gekennzeichnet, daß** während der Phase der Dehydratation die flüssig-feste Mischung durch eine Filterpresse gepumpt wird, in der das enthaltene Wasser unter Mitnahme des wasserlöslichen Bestandteile entfernt wird.

5. Verfahren zur Verfestigung der Reinigungsrückstände von Müllverbrennungsabgasen und von industriellen Abfällen gemäß den Ansprüchen 1 bis 4, **dadurch gekennzeichnet, daß** während der Phase der Dehydratation die sich in der Filterpresse bildenden Fladen durch im Gegenstrom in die Filterpresse injiziertes Wasser ausgewaschen werden.

6. Verfahren zur Verfestigung der Reinigungsrückstände von Müllverbrennungsabgasen und von industriellen Abfällen gemäß den Ansprüchen 1 bis 5, **dadurch gekennzeichnet, daß** während der Phase der teilweisen Rehydratation den Fladen über eine Sprührampe oder mittels Immersion Wasser zugesetzt wird, um eine Hydratisation der Silikat- und Siliko-Aluminatkristalle zu gewährleisten.

7. Verfahren zur Verfestigung der Reinigunsrückstände von Müllverbrennungsabgasen und von industriellen Abfällen gemäß den Ansprüchen 1 bis 5, **dadurch gekennzeichnet, daß** während der Phase der Behandlung des aus der in den beiden ersten Phasen gebildeten Mischung mittels Filtration herausgepreßten Wassers diesem Wasser eine geeignete Säure zur Einstellung des pH-Wertes zugesetzt wird.

8. Verfahren zur Verfestigung der Reinigungsrückstände von Müllverbrennungsabgasen und von industriellen Abfällen gemäß den Ansprüchen 1 bis 5, **dadurch gekennzeichnet, daß** während der Phase der Behandlung des aus der in den beiden ersten Phasen gebildeten Mischung durch Filtration herausgepreßten Wassers das Wasser mittels einer Absetzvorrichtung von den gelösten Stoffen geklärt wird.

9. Verfahren zur Verfestigung der Reinigungsrückstände von Müllverbrennungsabgasen und von flüssigen und festen industriellen Abfällen, **dadurch gekennzeichnet, daß** während der Phase der Behandlung des aus der in den beiden ersten Phasen gebildeten Mischung durch Filtration herausgepreßten Wassers das Wasser zur Entfernung von organischen, biologisch abbaubaren Bestandteilen mittels biologischer Reinigung behandelt wird.

10. Verfahren zur Verfestigung der Reinigungsrückstände von Müllverbrennungsabgasen und von industriellen Abfällen gemäß den Ansprüchen 1 bis 5, **dadurch gekennzeichnet, daß** während der Phase der Behandlung des aus der in den beiden ersten Phasen gebildeten Mischung durch Filtration herausgepreßten Wassers dieses Wasser über Sand und Aktivkohle oder über ein lonentauscher-Harz gefiltert wird.

11. Vorrichtung zur Verfestigung der Reinigungsrückstände von Müllverbrennungsabgasen und von flüssigen und festen industriellen Abfällen, **dadurch gekennzeichnet, daß** sie in Kombination eine Zerkleinerungs-und Kneteeinheit, eine Vorrichtung zur physiko-chemischen Behandlung und zur Extraktion, eine Hydratationseinheit und eine Einheit zur physiko-chemischen Behandlung des Filtrats umfaßt.

12. Vorrichtung zur Verfestigung der Reinigungsrückstände von Müllverbrennungsabgasen und von flüssigen und festen industriellen Abfällen gemäß Anspruch 11, **dadurch gekennzeichnet, daß** die Zerkleinerungs- und Kneteinheit einen Zerkleinerer und Knetrührer (1), ein Reservoir (2) für die festen Abfälle oder die Reinigungsrückstände von Müllverbrennungsabgasen, ein Reservoir (3) fÜr die Puzzolanerde-Reagenzien, ein Reservoir (4) für die hydraulischen Reagenzien sowie Transport- (5) (6) (7) und Pumpmittel (8) (9) umfaßt.

13. Vorrichtung zur Verfestigung der Reinigungsrückstände von Müllverbrennungsabgasen und von flüssigen und festen industriellen Abfällen gemäß Anspruch 11, **dadurch gekennzeichnet, daß** die Vorrichtung zur physiko-chemischen Behandlung und zur Extraktion aus zwei Reaktoren (10), (11), einem Reservoir (12) für die Reagenzien zur Unlöslichmachung der leichten Metalle und der Dekomplexierung, einem Reservoir (13) für saure Reagenzien, einem Reservoir (14) für Redox-Reagenzien und einem Pumpensystem (15) zur Förderung der flüssigen Reagenzien in die Reaktoren besteht.

14. Vorrichtung zur Verfestigung der Reinigungsrückstände von Müllverbrennungsabgasen und von flüssigen und festen industriellen Abfällen gemäß Anspruch 11, **dadurch gekennzeichnet, daß** die Dehydratationseinheit aus einer Filterpresse (17) sowie aus Pump- (16) und Transportmitteln (18) besteht.

15. Vorrichtung zur Verfestigung der Reinigungsrückstände von Müllverbrennungsabgasen und von flüssigen und festen industriellen Abfällen gemäß Anspruch 11, **dadurch gekennzeichnet, daß** die Dehydratationseinheit aus einem Speicherbottich (19) für Wasser, einer Pumpe (20) und einer Sprührampe besteht.

16. Vorrichtung zur Verfestigung der Reinigungsrückstände von Müllverbrennungsabgasen und von flüssigen und festen industriellen Abfällen gemäß Anspruch 11, **dadurch gekennzeichnet, daß** die Einheit zur physiko-chemischen Behandlung des Filtrats aus einem Speicherbottich (23) für die Säure, einer Pumpeinheit (24) mit einer Sonde zur Messung des pH-Wertes, einem Reaktor (25), einem Absetzbehälter (26), Einheiten zur biologischen Behandlung (27), zur Filtration über Sand (28), zur Filtration über Aktivkohle (29) und einer Einheiten zur Filtration über Harz (30) besteht.

## Claims

1. A process for the solidification of purification residues from the fumes of incinerators of household refuse, and of liquid and solid industrial waste, **characterised in that** it comprises, in combination with a grinding and mixing phase during which the residues or waste are mixed with pozzuolanic reagents and hydraulic reagents and during which extraction water or liquid waste is added, a reaction and extraction phase during which the mixtures obtained during the first phase are fed into reactors, in which the heavy metals are rendered insoluble by mixture with sodium sulphide and sodium carbonate, the pH of the mixture is adjusted by means of an acid, the soluble compounds are extracted from the residues and the waste by means of the water added in the grinding and mixing phase, and physico-chemical reactions take place by mixture with oxidising or reducing reagents, a dehydration phase in a filter press, a solidification and partial rehydration phase, and a final phase for treating the filtration water.

2. A process for the solidification of purification residues from the fumes of incinerators and of industrial waste according to claim 1, **characterised in that**, during the grinding and mixing phase, the waste is ground and mixed with the pozzuolanic and hydraulic reagents and the extraction water or liquid waste is added.

3. A process for the solidification of purification residues from the fumes of incinerators and of industrial waste according to claims 1 and 2, **characterised in that**, during the reaction and extraction phase, the mixtures formed in the first phase are fed into the reactors (10) (11), in which metal sulphides or carbonates are formed by means of a mixture of sodium sulphide and sodium carbonate, the pH of the mixture is adjusted by means of either CO₂ gas or sulphuric, hydrochloric or nitric acid, oxido-reduction reactions take place which are intended to reduce the harmfulness of the pollutants present in the mixtures by addition of oxidising and reducing reagents.

4. A process for the solidification of purification residues from the fumes of incinerators and of industrial waste according to claims 1 to 3, **characterised in that**, during the dehydration phase, the liquid-solid mixture is pumped into a filter press, from which the water therein is discharged, carrying with it the water-soluble materials.

5. A process for the solidification of purification residues from the fumes of incinerators and of industrial waste according to claims 1 to 4, **characterised in that**, during the dehydration phase, the cakes formed in the filter press are washed by injection of water through the filter press in countercurrent.

6. A process for the solidification of purification residues from the fumes of incinerators and of industrial waste according to claims 1 to 5, **characterised in that**, during the partial rehydration phase, water is added to the cakes to ensure the hydration of the crystals of silicates and aluminium silicates by means of a spraying ramp or by immersion.

7. A process for the solidification of purification residues from the fumes of incinerators and of industrial waste according to claims 1 to 5, **characterised in that**, during the phase for treatment of the water expelled by filtration from the mixtures formed in the first two phases, a suitable acid is added to this water in order to adjust the pH.

8. A process for the solidification of purification residues from the fumes of incinerators and of industrial waste according to claims 1 to 5, **characterised in that**, during the phase for treatment of the water expelled by filtration from the mixtures formed in the first two phases, the water is decanted from the suspended materials by means of a decanter.

9. A process for the solidification of purification residues from the fumes of incinerators of household refuse, and of liquid and solid industrial waste, **characterised in that**, during the phase for treatment of the water expelled by filtration from the mixtures formed in the first two phases, the water is treated by biological purification in order to eliminate the biodegradable organic compounds.

10. A process for the solidification of purification residues from the fumes of incinerators and of industrial waste according to claims 1 to 5, **characterised in that**, during the phase for treatment of the water expelled by filtration from the mixtures formed in the first two phases, this water is filtered over sand and activated carbon or over an ion-exchange resin.

11. An installation for the solidification of purification residues from the fumes of incinerators of household refuse, and of liquid and solid industrial waste, **characterised in that** it comprises, in combination with a grinding and mixing unit, an installation for physico-chemical treatment and extraction, a dehydration unit, a hydration unit and a unit for the physico-chemical treatment of the filtrates.

12. An installation for the solidification of purification residues from the fumes of incinerators of household refuse, and of liquid and solid industrial waste according to claim 11, **characterised in that** the grinding and mixing unit comprises a grinder-mixer (1), a vessel (2) for the solid waste or the residues, a vessel (3) for the pozzuolanic reagents, a vessel (4) for the hydraulic reagents and transportation means (5) (6) (7) and pumping means (8) (9).

13. An installation for the solidification of purification residues from the fumes of incinerators of household refuse, and of liquid and solid industrial waste according to claim 11, **characterised in that** the installation for physico-chemical treatment and extraction comprises two reactors (10) (11), a vessel (12) for the reagents for rendering the heavy metals insoluble and for the decomplexing reagents, a vessel (13) for the acid reagents, a vessel (14) for oxido-reduction reagents and a system (15) for pumping the liquid reagents towards the reactors.

14. An installation for the solidification of purification residues from the fumes of incinerators of household refuse, and of liquid and solid industrial waste according to claim 11, **characterised in that** the dehydration unit comprises a filter press (17) and pumping means (16) and transportation means (18).

15. An installation for the solidification of purification residues from the fumes of incinerators of household refuse, and of liquid and solid industrial waste according to claim 11, **characterised in that** the rehydration unit comprises a water storage tank (19), a pump (20) and a spraying ramp (21).

16. An installation for the solidification of purification residues from the fumes of incinerators of household refuse, and of liquid and solid industrial waste according to claim 11, **characterised in that** the unit for treatment of the filtrates comprises a storage tank (23) for the acid, a pumping system (24) with a sensor for pH measurement, a reactor (25), a decanter (26), units for biological treatment (27), filtration over sand (28), filtration over activated carbon (29) and a unit for filtration over resin (30).
